Europäisches Patentamt

European Patent Office

Office européen des brevets

(11) Numéro de publication: **0 396 481**

**A1**

(12) **DEMANDE DE BREVET EUROPEEN**

(21) Numéro de dépôt: 90450007.1

(51) Int. Cl.⁵: **A23L 1/28, A23D 7/00**

(22) Date de dépôt: 02.04.90

(30) Priorité: 03.04.89 FR 8904493

(43) Date de publication de la demande:
07.11.90 Bulletin 90/45

(84) Etats contractants désignés:
BE DE ES IT LU NL

(71) Demandeur: Pallier, Raymond
Bressac, Sainte Foy de Longas

F-24510 Sainte-Alvère(FR)

(72) Inventeur: Pallier, Raymond
Bressac, Sainte Foy de Longas
F-24510 Sainte-Alvère(FR)

(74) Mandataire: Thébault, Jean-Louis
Cabinet Thébault S.A. 50 Cours de Verdun
F-33000 Bordeaux(FR)

(54) Procédé d'obtention d'huile aromatisée à la truffe noire naturelle et dispositif pour sa mise en oeuvre.

(57) - L'invention concerne un procédé d'obtention d'huile aromatisée à la truffe noire naturelle caractérisé en ce qu'il consiste à faire macérer dans une huile végétale (4) des truffes naturelles fraîches hâchées (6), à diffuser dans la masse d'huile, au cours de ladite macération, de l'air de confinement provenant d'une enceinte fermée (13) renfermant des truffes naturelles fraîches entières (14), puis, au bout d'un laps de temps de macération fonction du rapport pondéral entre l'huile et les truffes hâchées, à égoutter ces dernières, à réchauffer rapidement l'huile ainsi aromatisée en vue de développer les aromes sans les dénaturer et enfin à la refroidir rapidement en vue de la ramener à la température ambiante. L'invention concerne également un dispositif pour la mise en oeuvre de ce procédé.

Application à la fabrication d'huile aromatisée à la truffe naturelle.

EP 0 396 481 A1

La présente invention a trait à un procédé d'obtention d'huile aromatisée à la truffe noire naturelle.

Ce type de produit existe déjà et est obtenu, soit par simple macération de truffes fraîches dans une huile végétale, soit par utilisation d'aromes synthétiques.

Dans le premier cas, si l'huile ainsi aromatisée présente de très bonnes qualités organoleptiques, la dégradation rapide des truffes immergées dans l'huile contraint à utiliser cette dernière pratiquement dans la quinzaine suivant sa préparation. Cette technique d'aromatisation ne peut donc être, pour cet inconvénient d'impossibilité de conservation, utilisée à échelle industrielle.

Dans le deuxième cas, le recours à des aromes synthétiques ne permet pas encore, et de loin, de reconstituer l'arome réel complexe de la truffe noire.

La présente invention vise à pallier les inconvénients de ces deux modes actuels de fabrication d'une huile aromatisée à la truffe, en proposant un procédé permettant d'obtenir une huile aromatisée à la truffe naturelle et susceptible d'une bonne conservation sur une durée suffisante pour une exploitation industrielle dans des conditions normales.

A cet effet, l'invention a pour objet un procédé d'obtention d'huile aromatisée à la truffe noire naturelle, caractérisé en ce qu'il consiste à faire macérer dans une huile végétale des truffes naturelles fraîches hâchées, à diffuser dans la masse d'huile, au cours de ladite macération, de l'air de confinement provenant d'une enceinte fermée renfermant des truffes naturelles fraîches entières, puis, au bout d'un laps de temps de macération fonction du rapport pondéral entre l'huile et les truffes hâchées, à égoutter ces dernières, à réchauffer rapidement l'huile ainsi aromatisée en vue de développer les aromes sans les dénaturer et enfin à la refroidir rapidement en vue de la ramener à la température ambiante.

Un tel procédé permet d'obtenir de l'huile dont les qualités aromatiques sont remarquables et aptes à se conserver sur une durée importante, de l'ordre d'une année, correspondant au cycle naturel de production de la truffe, ce qui autorise une fabrication industrielle, de l'huile aromatisée selon le procédé de l'invention étant ainsi disponible tout au long de l'année.

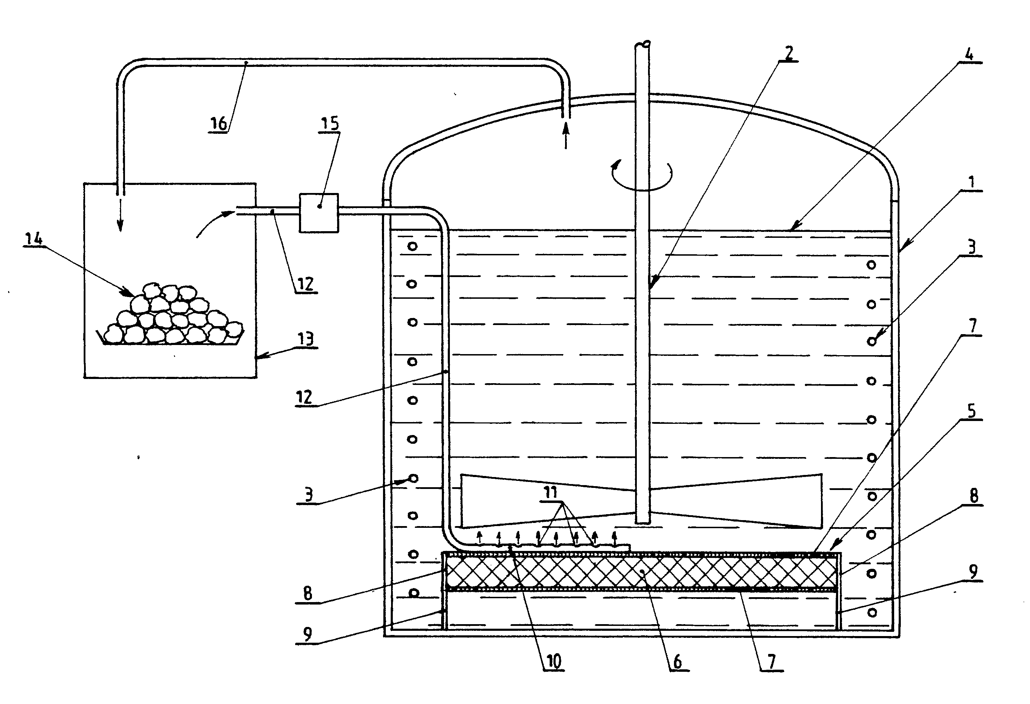

D'autres caractéristiques et avantages ressortiront de la description qui va suivre d'un mode de mise en oeuvre du procédé de l'invention, description donnée à titre d'exemple uniquement et en regard du dessin annexé sur lequel la figure unique illustre schématiquement une installation propre à la mise en oeuvre dudit procédé.

Sur cette figure unique on a représenté en 1 une cuve du type tank à lait, c'est-à-dire une enceinte susceptible d'être fermée hermétiquement par un couvercle, comprenant un agitateur 2, un serpentin 3 dans lequel est susceptible de circuler de l'eau chaude ou froide régulée par thermostat et sonde, l'espace au-dessus du liquide contenu dans la cuve pouvant être mis sous un certain vide.

La cuve 1 est remplie par un circuit approprié (non représenté) d'une huile végétale 4 à aromatiser.

Sur le fond de la cuve 1 repose, en dessous de l'agitateur 2, un récipient 5 contenant des truffes naturelles fraîches hâchées 6 et constitué de deux tamis superposés 7, d'une ceinture périphérique 8 et de pieds 9. Les morceaux de truffes hâchées ont de préférence une dimension moyenne de l'ordre de 1

Sur le tamis supérieur 7 est placée une rampe 10 munie de trous 11, reliée par un conduit approprié 12 à une enceinte fermée 13 disposée à l'extérieur de la cuve 1 et renfermant une certaine quantité de truffes fraîches naturelles entières 14.

L'enceinte 13 est réfrigérée et sa température intérieure est de préférence inférieure ou égale à 10°C environ. Une pompe 15 est interposée dans le conduit 12.

Enfin, une canalisation 16 relie l'enceinte fermée 13 à l'espace au-dessus de l'huile 4 à l'intérieur de la cuve 1.

L'agitateur 2, le récipient 5 et la rampe 10 sont amovibles et peuvent être retirés de la cuve 1.

Le fonctionnement de l'installation décrite ci-dessus est le suivant.

Les truffes hâchées 6, préalablement lavées sous trommel et pression d'eau et ressuyées, sont mises en place dans le récipient 5, l'un des tamis 7, ou les deux, étant amovibles, et forme une sorte de gâteau qui est placé dans le fond de la cuve 1, laquelle est remplie d'une huile végétale 4 appropriée, de préférence neutre, telle qu'une huile de tournesol par exemple.

L'épaissur du gâteau de truffes hâchées 6 est par exemple de l'ordre de 5 cm.

La proportion de truffes 6 par rapport à l'huile est variable et de l'ordre de 1 kg de truffes pour une quantité d'huile de 20 à 40 litres.

Une fois la cuve 1 remplie, elle est mise sous vide et la température de l'huile 4 est portée grâce au serpentin 3 à une température inférieure à 10°C et par exemple de l'ordre de 5°C environ.

La durée de la macération des truffes hâchées 6 est de l'ordre de 48 heures.

Pendant l'abaissement en température de l'huile 4, l'agitateur 2 est en service (agitation lente), puis, une fois la température de macération atteinte, il est stoppé et ne sera remis en marche que périodiquement par périodes de quelques minutes seulement.

L'actionnement de l'agitateur 2 provoque des mouvements de convection dans la masse d'huile 4 qui traverse ainsi la masse de truffes hâchées 6 et se charge d'arome.

De plus, durant cette phase de macération, on effectue un dopage en arome grâce à la rampe de diffusion 10 qui injecte grâce à la pompe 15 de l'air de confinement provenant de l'enceinte 13. Cet air est hautement chargé en arome dégagé par les truffes 14.

Les paramètres d'un tel dopage, à savoir le débit d'air dans le conduit 12, dosé grâce à la pompe 15, et la durée sont fonction du poids et de l'indice de respiration des truffes 14. La canalisation 16 permet une circulation en circuit fermé dudit air de confinement en récupérant ce dernier au-dessus de l'huile 4 après barbotage dans la masse d'huile.

A la fin de la phase de macération, on égoutte les truffes hâchées 6, on réchauffe rapidement l'huile de la cuve jusqu'à une température comprise entre 40 et 60°C, afin de développer les aromes, puis on refroidit rapidement l'huile pour la ramener à la température ambiante, ces deux opérations étant réalisées grâce au serpentin 3.

Avantageusement, le récipient à parois filtrantes 5 est conçu de manière à permettre un pressage du gâteau de truffes 6 avant son égouttage, l'un des deux tamis 7 étant par exemple monté coulissant en direction de l'autre tamis 7.

Le réchauffage rapide de l'huile aromatisée s'opère sur une durée inférieure ou égale à deux heures, de même que le refroidissement rapide, l'agitateur 2 étant en service au cours de ces deux opérations, pendant au moins une partie du temps de celles-ci.

L'huile aromatisée ainsi obtenue présente des propriétés organoleptiques remarquables qu'elle conserve sur une période de temps de l'ordre d'une année, ce qui permet ainsi d'avoir tout au long de l'année un produit aromatisé d'excellente qualité.

Il est à noter que les truffes hâchées 6 peuvent être récupérées dans leur intégralité, en n'ayant perdu pratiquement pas de poids et sont commercialisables sous la dénomination truffes hâchées, leurs qualités gestatives étant également tout à fait remarquables.

Enfin, les truffes 14 ayant servi au dopage en arome ne sont en rien dépréciées et sont réutilisables en tant que truffes fraîches naturelles.

Bien entendu, l'invention n'est évidemment par limitée au mode de mise en oeuvre représenté et décrit ci-dessus mais en couvre au contraire toutes les variantes notamment en ce qui concerne les proportions des ingrédients, les durées et températures des diverses opérations, ou la manière de constituer le gâteau de truffes hâchées 6 à faire macérer dans l'huile. De même, au lieu d'une rampe de dopage 10 on peut en prévoir plusieurs, ou d'autres dispositifs de diffusion, de configurations et dispositions diverses, l'essentiel étant que ce ou ces dispositifs diffuseurs soient placés dans la trajectoire de convection, naturelle ou forcée, de la masse d'huile 4 contenue dans la cuve 1.

## Revendications

1 Procédé d'obtention d'huile aromatisée à la truffe noire naturelle, caractérisé en ce qu'il consiste à faire macérer dans une huile végétale (4) des truffes naturelles fraîches hâchées (6), à diffuser dans la masse d'huile, au cours de ladite macération, de l'air de confinement provenant d'une enceinte fermée (13) renfermant des truffes naturelles fraîches entières (14), puis, au bout d'un laps de temps de macération fonction du rapport pondéral entre l'huile et les truffes hâchées, à égoutter ces dernières, à réchauffer rapidement l'huile ainsi aromatisée en vue de développer les aromes sans les dénaturer et, enfin à la refroidir rapidement en vue de la ramener à la température ambiante.

2. Procédé suivant la revendication 1, caractérisé en ce que ladite macération s'effectue sous vide, à une température inférieure à 10°C environ.

3. Procédé suivant la revendication 2, caractérisé en ce que l'huile (4) est soumise à agitation pendant l'abaissement de sa température ainsi qu'éventuellement, lorsque la température est stabilisé, de préférence périodiquement.

4. Procédé suivant l'une des revendications 1 à 3, caractérisé en ce que les truffes hâchées (6) ont une dimension moyenne de particules de l'ordre de 1 mm.

5. Procédé suivant l'une des revendications 1 à 4, caractérisé en ce que la proportion entre l'huile (4) et les truffes hâchées (6) est de l'ordre de un Kg de truffes pour 20 à 40 litres d'huile environ.

6. Procédé suivant l'une des revendications 1 à 5, caractérisé en ce que les truffes naturelles entières (14) sont maintenues dans ladite enceinte (13) à une température inférieure ou égale à 10°C.

7. Procédé suivant l'une des revendications 1 à 6, caractérisé en ce que l'air de confinement provenant de ladite enceinte fermée (13) est acheminé dans la masse d'huile (4) suivant un débit prédéterminé fonction du poids des truffes (14) et de leur indice de respiration.

8. Procédé suivant la revendication 7, caractérisé en ce que l'air de confinement après barbotage dans l'huile (4) est récupéré au-dessus de cette dernière et renvoyé dans ladite enceinte (13) à truffes entières (14).

9. Procédé suivant l'une des revendications 1 à 8, caractérisé en ce que les truffes hâchées (6), au cours de l'égouttage, sont pressées afin d'exprimer et de récupérer une partie de l'huile contenue.

10. Procédé suivant l'une des revendications 1 à 9, caractérisé en ce qu'une partie au moins des phases de réchauffage puis de refroidissement, après égouttage des truffes hâchées (6), s'opère sous agitation.

11. Dispositif pour la mise en oeuvre du procédé selon l'une des revendications 1 à 10, caractérisé en ce qu'il comprend une cuve (1) susceptible d'être fermée hermétiquement et mise sous vide, munie intérieurement d'un agitateur (2) et d'un serpentin (3) de réchauffage ou refroidissement, un récipient (5) à parois filtrantes (7) susceptibles de recevoir une masse de truffes hâchées (6) et disposé au droit de l'agitateur (2), une enceinte hermétique réfrigérée (13) reliée par une canalisation (12) munie d'une pompe (15) à un dispositif de diffusion (10) disposé dans la trajectoire de convection de l'huile (4) contenue dans ladite cuve (1), ladite enceinte (13) contenant des truffes fraîches naturelles entières (14), l'espace au dessus de l'huile (4) étant relié à l'enceinte (13) par une canalisation de retour (16).

Office européen
des brevets

**RAPPORT DE RECHERCHE EUROPEENNE**

Numero de la demande

EP 90 45 0007

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1 347 023 (P. NATAF)<br>* Résumé; exemple 2 *<br>--- | 1,11 | A 23 L 1/28<br>A 23 D 7/00 |
| Y | PATENT ABSTRACTS OF JAPAN, vol. 4, no. 101 (C-19)[583], page 104 C 19; & JP-A-55 64 779 (SHIMIZU AOYANAGI) 15-05-1980<br>* Résumé *<br>----- | 1,11 | |

DOMAINES TECHNIQUES RECHERCHES (Int. Cl.5)

A 23 L
A 23 D

Le présent rapport a été établi pour toutes les revendications

| Lieu de la recherche | Date d'achèvement de la recherche | Examinateur |
|---|---|---|
| LA HAYE | 26-06-1990 | VAN MOER A.M.J. |